# EUROPEAN PATENT APPLICATION

(11) **EP 4 570 950 A1**
(43) Date of publication of application: **18.06.2025**
(21) Application number: 23216310.5
(22) Date of filing: 13.12.2023
(51) Int. Cl.: C25B 1/04, C25B 9/19, C25B 9/77, C25B 15/025, C25B 15/027, C25B 15/029

(54) **AN ELECTROLYZER WITH A MULTI-PARAMETER MEASUREMENT SYSTEM**

(71) Applicant: Nederlandse Organisatie voor toegepast-natuurwetenschappelijk Onderzoek TNO, 2595 DA 's-Gravenhage (NL)
(72) Inventor: CHENG, Lun-Kai, 2595 DA 's-Gravenhage (NL); XU, Man, 2595 DA 's-Gravenhage (NL)
(74) Representative: V.O.

(57) **Abstract**

The present invention relates to an electrolyzer designed for the generation of hydrogen and oxygen through water electrolysis. The electrolyzer comprises a housing structure accommodating at least one electrolytic cell, which includes an anode, a cathode, and an ion-conducting membrane. A water inlet is provided to introduce water into the electrolytic cell, and an electrical power source is operatively connected to the anode and cathode to facilitate the electrolysis process. The electrolyzer also includes separate outlets for the efficient extraction of hydrogen and oxygen generated during electrolysis. A multi-parameter optical measurement system is integrated within the electrolyzer. This system features at least one optical fiber with multiple sensing points distributed along its length, each capable of detecting various operational parameters within the electrolyzer.

## Description

### FIELD OF THE INVENTION

The invention relates to an electrolyzer for generating hydrogen and oxygen. Furthermore, the invention relates to a method of arranging an electrolyzer. Additionally, the invention relates to a multi-parameter optical measurement system configured and adapted to be capable of being integrated in an electrolyzer. The invention also relates to a use of a multi-parameter optical measurement system for monitoring operational parameters within an electrolyzer. Further, the invention also relates to a use of monitored data to generate information for adapting the electrolyzer operational setting, for example for improving the electrolyzer performance.

### BACKGROUND TO THE INVENTION

Electrolyzers are an important components in the field of energy conversion and storage. Such devices are widely used for generating hydrogen and oxygen through the process of electrolysis. However, there are challenges faced in monitoring and optimizing the operational parameters within these systems to ensure efficiency, safety, and longevity.

Traditional electrolyzers often rely on external sensors and monitoring systems on the housing. This limitation results in a lack of comprehensive and real-time data, hindering the ability to effectively monitor and respond to changes in operational parameters like temperature, pressure, and gas concentration inside the electrolyzer close to the actual process. The absence of detailed monitoring capabilities restricts the optimization of the electrolysis process and can lead to inefficiencies and increased operational risks.

There may be gaps in monitoring, especially in critical areas that are difficult to access or are too small for traditional sensors. Furthermore, the existing technologies generally provide averaged or delayed data, which does not adequately represent the rapidly changing conditions within an electrolyzer. This lack of real-time, localized data collection can result in delayed and accurate responses of the process to operational anomalies, potentially leading to reduced efficiency and increased wear and tear on the system.

The diversity of electrolyzer designs poses a significant challenge for traditional monitoring systems, which are often not versatile enough to adapt to different configurations and operational requirements. This lack of adaptability can hinder the application of these systems in various types of electrolyzers, limiting their usefulness and applicability across different designs and use cases.

In summary, the current state of the art in electrolyzer technology exhibits significant limitations in terms of monitoring capabilities, adaptability, and operational efficiency. These shortcomings underscore the need for an versatile monitoring solution capable of addressing the complex and diverse requirements of modern electrolyzers.

### SUMMARY OF THE INVENTION

It is an object of the invention to provide for a method and a system that obviates at least one of the above mentioned drawbacks.

Additionally or alternatively, it is an object of the invention to improve the design of an electrolyzer.

Additionally or alternatively, it is an object of the invention to provide for an electrolyzer with enhanced parameter monitoring capabilities

Additionally or alternatively, it is an object of the invention to improve operational settings control and/or optimization.

Thereto, the invention provides for an electrolyzer for generating hydrogen and oxygen, comprising: a housing structure; at least one electrolytic cell contained within the housing structure, the electrolytic cell comprising an anode and a cathode separated by an ion-conducting membrane; a water inlet configured to introduce water into the electrolytic cell; an electrical power source operatively connected to the anode and cathode to facilitate electrolysis of water; and outlets for hydrogen and oxygen, each fluidly connected to the electrolytic cell to enable extraction of hydrogen and oxygen generated during the electrolysis process; and wherein a multi-parameter optical measurement system is integrated within the electrolyzer, the multi-parameter optical measurement system being configured to monitor multiple operational parameters, wherein the multi-parameter optical measurement system comprises at least one optical fiber configured to extend within the electrolyzer, wherein multiple sensing points are distributed along said at least one optical fiber, and wherein each sensing point is configured to detect one or more operational parameters within the electrolyzer.

The electrolyzer is equipped with a multi-parameter optical measurement system, integrating optical fibers with multiple sensing points to monitor operational parameters. Advantageously, the system has the ability to provide real-time, localized, and comprehensive data regarding the electrolyzer's operational conditions. This precision is achieved through the distributed sensing points along the optical fibers, enabling detailed monitoring within the complex structure of the electrolyzer, thus enhancing its efficiency and safety.

The distributed sensing points along the optical fibers allow for localized measurements of various operational parameters. Each sensing point acts as a discrete sensor, capable of monitoring conditions at its specific location within the electrolyzer. This localized monitoring is important for detecting and analyzing conditions that vary across different parts of the electrolyzer, such as temperature gradients, pressure differences, or the concentration of gases.

Electrolyzers, especially those used in industrial applications, often have intricate internal structures with various components like electrodes, membranes, and flow channels. The complexity of these structures can make it challenging to monitor operational parameters uniformly across the entire system. The distributed sensing points on the optical fibers provide a means to obtain detailed insights into these complex structures, enabling the detection of operational anomalies or inefficiencies that might not be noticeable with more conventional, less granular monitoring methods.

The optical fibers with distributed sensing points can offer the advantage of real-time data acquisition. This immediacy in monitoring can be important for prompt response to changing conditions within the electrolyzer. For instance, rapid detection of temperature spikes or unexpected pressure changes can trigger immediate corrective actions, preventing potential damage or inefficiencies.

By providing detailed and localized data, the system allows for more precise control over the electrolysis process. This precision directly translates to enhanced efficiency, as it enables the fine-tuning of operational parameters to optimize performance. For example, understanding the exact temperature distribution within the electrolyzer can help in maintaining optimal conditions for electrolysis, thus improving the overall hydrogen production efficiency. The information can also be used for the design of the next generation electrolyzer.

Furthermore, in electrolyzers, especially those dealing with high pressures and temperatures, safety is of great importance. The distributed sensing points, using optical fibers that can be arranged easily within various parts of the electrolyzer, can detect hazardous conditions like leaks, pressure buildups, or temperature extremes early on. This early detection is important for initiating safety protocols and preventing accidents, thereby ensuring the safety of the operation and personnel.

Through continuous and detailed monitoring, potential issues can be identified and addressed before they escalate into major problems. This proactive approach to maintenance can significantly reduce downtime and extend the lifespan of the electrolyzer.

It will be appreciated that the multi-parameter optical measurement system can be employed with different types of optical fibers, depending on the required sensitivity and measurement range.

A first sensing point may be located at a first position along the optical fiber, configured to monitor a first operational parameter within the electrolyzer. A second sensing point located at a second position along the optical fiber, distinct from the first position, configured to monitor a second operational parameter within the electrolyzer. The second operational parameter can be different from the first operational parameter.

Optionally, the fiber optic sensors integrated within the at least one optical fiber of the multi-parameter optical measurement system have a small dimension. In some examples, the optical fiber may have a diameter ranging from approximately 40 micrometers to 125 micrometers, or even in some examples to 250 micrometers. In this way, interference with the electrolyzer operation can be avoided while maintaining the functional integrity and sensitivity to the operational parameters being monitored.

Optionally, the at least one optical fiber is led outside the electrolyzer via a fiber feedthrough, which is specifically designed to maintain the integrity and isolation of the electrolyzer's internal environment while allowing the optical fiber to exit the housing structure for connection to external monitoring equipment, thereby enabling the multi-parameter optical measurement system to function effectively without compromising the structural and operational integrity of the electrolyzer.

Optionally, the multi-parameter optical measurement system further comprises a plurality of sensor types integrated within a same optical fiber, each sensor type being distinct and configured to monitor a specific operational parameter of the electrolyzer, and wherein the at least one optical fiber is routed through multiple parts of the electrolyzer in order to monitor operational parameters in different regions of the electrolyzer.

This configuration ensures a compact and efficient monitoring solution, capable of measuring different parameters simultaneously. By routing this optical fiber through multiple parts of the electrolyzer, it can monitor conditions in different regions, offering a comprehensive view of the system's operational status. By consolidating multiple sensors into a single fiber, the system minimizes the need for multiple, separate sensors. This design reduces the space required for sensor installation at the dedicated location of the complex electrolyzer and lowers the complexity of the monitoring system. The compact nature of this design is particularly beneficial in the confined spaces of an electrolyzer.

The ability to monitor various parameters simultaneously provides an enhanced view of the electrolyzer's operational status. This comprehensive monitoring can be important for the precise control and optimization of the electrolysis process, allowing for real-time adjustments and interventions. Simultaneous data collection from multiple sensors also facilitates more efficient data analysis and quicker decision-making processes.

The single optical fiber, housing multiple sensors, can be routed through different parts of the electrolyzer. This flexibility in routing can be realized by using special optical fiber and ensures that the system can monitor conditions in diverse regions within the electrolyzer, from the core reaction areas to peripheral components. Such versatility can be important for tailoring the monitoring system to specific design layouts and operational needs of different electrolyzer models.

With sensors distributed throughout the electrolyzer, the system can detect and respond to changes in operational conditions more adequately and effectively. This capability can be important for maintaining optimal performance, ensuring safety, and prolonging the lifespan of the electrolyzer. For instance, early detection of abnormal temperature gradients or pressure fluctuations which indicates problem e.g. in the local flow conditions can prompt preventative maintenance, averting potential malfunctions or damages.

Integrating multiple sensors into a single fiber reduces the overall cost of the monitoring system, both in terms of initial setup and ongoing maintenance. Fewer components mean simpler maintenance routines and lower chances of sensor failures, which translates to reduced operational costs and downtime.

Furthermore, a proximity of different sensor types within a single fiber allows for the cross-validation of data. This proximity can enhance the accuracy of measurements, as anomalies detected by one sensor type can be quickly corroborated by others. Such cross-validation can be important for ensuring the reliability of the data, which forms the basis for all subsequent operational decisions and adjustments in the electrolyzer. This can be facilitated by providing a chain of sensors on a same fiber and/or arranging different fibers in close proximity to each other.

In some examples, the routing of the optical fiber can be designed in a meandering manner on a surface of subcomponent of the electrolyzer, to enhance the exposure of the fiber to various parts of the electrolyzer and improve the accuracy of measurements. Various meandering or winding patterns can be employed. Such pattern may have regular twists and turns resulting in improved coverage. For example, in a meandering pattern, the lines or paths can fold back on themselves in a series of turns, loops, or curves. This pattern can be regular and repeating. However, in some alternative examples, it can be irregular, with varying degrees of curvature and length in the meanders. It will be appreciated that the configuration may depend highly on the surface on which the fiber optic line(s) are provided.

In some examples, the line in a meandering pattern may be unbroken and continuous, with no clear start or end point within the pattern itself. Various curve configurations may be employed. While each individual turn can be unique, meanders often have a repetitive nature, with similar shapes recurring throughout the design. The fiber optic line may frequently change direction, creating an arrangement in which a regular distribution of sensors over an area or surface can be obtained.

In some alternative examples, the routing of the optical fiber can be designed in a helical or coiled manner within the electrolyzer, to enhance the exposure of the fiber to various parts of the electrolyzer and improve the accuracy of measurements. Such pattern may be advantageous when employed in openings or flow channels within the electrolyzer.

Optionally, the multi-parameter optical measurement system includes at least two of, preferably, at least three of: a temperature sensor, a strain sensor, a fluid flow sensor, a fluid characterization sensor, a gas-in-liquid detection sensor, a pressure sensor, a gas sensing sensor, or a chemical composition sensor.

Optionally, each of the sensors are arranged to operate at different locations.

The monitoring of a wide range of operational parameters can be important for the efficient functioning of the electrolyzer. By using multiple sensor types, the system can adapt to specific monitoring requirements, for example enhancing its capability to detect and analyze complex flow conditions and other important parameters within the electrolyzer.

The diverse sensor inclusion allows the system to be highly adaptable to specific monitoring needs. Depending on the electrolyzer's design and operational requirements, appropriate sensors can be selected and integrated. This adaptability is particularly beneficial in customizing the system for different electrolyzer designs or for monitoring specific processes within the electrolyzer.

The system's ability to detect and analyze complex flow conditions and other important parameters is significantly improved with the inclusion of various sensors. For instance, temperature sensors can detect heat variations indicating potential issues, while strain sensors can monitor structural integrity. Gas sensors provide vital information on gas composition and concentrations, which are important for assessing the electrolyzer's performance and safety.

Temperature can be measured using and optical fiber. For example, a FBG of which the Bragg reflection wavelength is a function of the temperature can be used. FBG type of sensor can be design and manufactured in an array configuration in one single fiber to enable temperature distribution mapping of an area e.g. inside an reaction area to identify location dependency of the reaction. FBG sensors close to each other can provide temperature gradient information e.g. in/cross channel temperature distribution/gradient, cross membrane layer, cross functional layer temperature gradient.

The temperature sensing FBGs may for example be bonded to the functional layers/surfaces, free hanging in the flow channels, etc. Exemplary measurands are: temperature distribution in flow channel, temperature distribution in construction, temperature gradient in channel, cross functional layer., etc.

Additionally or alternatively, a FBG attached or bonded to the construction can be used to measure strain changed and operation condition of the construction, e.g. the electrolyzer housing, the functional layer, etc. High frequency strain variation can be identified from the strain measurement data with sufficient measurement bandwidth. This strain fluctuation can be related to vibration of the construction. For functional layers, vibration can induce mechanical degradation and hence damage which can be monitored using the FBG strain sensor. Exemplary measurands are: local strain of construction, strain variation of functional layer, vibration of functional layer, degradation of damage of functional layer, etc.

The strain sensing FBG will also be sensitive to temperature. This effect can be canceled out by information achieved using the temperature FBGs.

Additionally or alternatively, flow direction and speed can provide information about condition or operation of the electrolyzer. Flow speed and direction be measured by different configuration of FBG sensor including: using addition mechanism to reshape the fiber to generate flow induced vibration of the fiber/FBG; by correlation of thermal response of FBGs on short distance in the same flow channel; by anemometric configuration using a optically heated fiber.

Additionally or alternatively, a high-speed variation of temperature can be monitored by employing a FBG in direct contact with the flow medium. This is identified to be related to the presence/generation of gas bubble in the liquid which has a different temperature and/or thermal capacity from the liquid. A thermocouple cannot be made in an array configuration for measurement at different locations by one single wire.

In a flow channel with known flow speed, the proposed gas bubble detection using FBG can reveal information about bubble generation speed and/or the size of the bubble by detail analysis of the time response. The measurands can be presence of gas bubble in liquid (flow); gas bubble generation rate in liquid (flow); gas bubble size distribution in liquid (flow); presence of liquid in gas flow; or the like.

Additionally or alternatively, a FBG pressure sensor may be employed. FBG in bare optical fiber has a low pressure sensitivity of about -3 pm/MPa. For the detection of low pressure, either the sensitivity of the FBG interrogator needs to be improved or a transducer needs to be used to increase the mechanical response of the FBG. Miniaturized FBG based pressure sensor can be utilized using different types of transducer. Combination of the different sensitivity enhancement solutions can results in pressure sensor for in electrolyzer application. Examples are the mini pressure sensor; special phase-shifted FBG and interferometer interrogator.

Additionally or alternatively, a FBG sensor is employed as a hydrogen sensor. Palladium (alloy) has mechanical expansion after absorption of hydrogen. This is used as hydrogen sensor by applying a Pd coating layer from ~100 nm to ~1 micrometer thickness on a FBG. The hydrogen absorption induced coating expansion results in a strain of the FBG fiber. The shift in the FBG wavelength spectrum is a measure of the hydrogen concentration. Different Bragg grating types can be used including standard homogenous FBG, phase-shifted FBG or long period grating (LPG) to achieve the required specifications e.g. sensitivity, multiplexing capability etc.

Additionally or alternatively, a gas concentration sensor is employed. Concentration of (other) gasses in the electrolyzer system can be measured with a miniaturized gas sensor e.g. a hollow core fiber sensor. The hollow core fiber (HCF) sensor is based on laser absorption of the gas to be detected. Due to holes in the hollow core fiber connected to the environment, gas will flow into the hollow core. When the pump laser with a wavelength matches to the absorption spectrum of the gas, part of the pump laser power will be absorbed and result in a temperature change of the gas which change the refractive index of the gas in the hollow core. A probe laser can be used to measure the optical path length (OPL) change of the hollow core fiber which is the product of the refractive index of the core and the length L of the hollow core fiber.

Additionally or alternatively, a gas concentration sensor is employed. Using interferometric measurement technology a change in optical path length (OPL) and hence the gas concentration can be measured with high sensitivity. By changing the wavelength of the pump laser, different gasses with different absorption wavelength can be measured using the same probe laser system to enable gas composition measurement. Exemplary measurands can be: gas concentration; gas composition using different absorption wavelengths; gas leakage detection; etc.

The electrolyzer voltage can be related to high-speed dynamic fluctuation of the temperature measured by a FBG in the liquid flow. This indicates the relation between voltage and the bubble forming. This can be used to adapt the voltage control to optimize the bubble forming.

The system may include an integrated data analysis component that collates and interprets data from the various sensors. The inclusion of diverse sensors allows for real-time monitoring of the electrolyzer's conditions. This immediacy enables prompt responses to any changes in operational parameters, preventing potential issues and maintaining optimal performance.

Optionally, different sensor types are arranged within the same optical fiber.

Optionally, the at least one optical fiber is arranged within one or more flow channels of the electrolyzer, the flow channels being configured to facilitate a flow of fluids within the electrolyzer, and wherein the optical fiber follows at least a portion of the path of the one or more flow channels.

This arrangement allows for direct monitoring of fluid dynamics, enabling the detection of changes in flow rates and patterns. Advantageously, fluid behavior can be tracked in real-time, providing insights that can optimize the electrolyzer's performance and prevent operational issues.

By placing the optical fibers along the flow channels, the system can capture real-time data on fluid behavior, such as flow rates, fluid pressures and/or other flow characteristics. This precise monitoring can be important for understanding the electrolytic process in greater depth.

The strategic placement of these fibers facilitates early detection of changes or anomalies in the flow, such as blockages, leaks, or irregular flow patterns. Early detection is key to preventing minor issues from escalating into major operational problems.

By tracking fluid dynamics, the system can help optimize the electrolyzer's performance. Understanding how fluids move and interact within the electrolyzer enables more precise control of the electrolysis process, leading to enhanced efficiency and yield.

The monitoring can aid in preventive maintenance. By identifying potential issues before they become significant, the system can help reduce downtime and extend the electrolyzer's operational lifespan.

The optical fibers can be positioned within the flow channels, which are important pathways for the movement of fluids within the electrolyzer, in different ways. The placement ensures that the fibers have direct contact with the fluids, allowing for accurate measurement of flow-related parameters.

The optical fibers incorporate advanced sensor technology, capable of detecting various parameters such as temperature, pressure, and flow rate. These sensors are highly sensitive and can pick up subtle changes in the fluid dynamics within the electrolyzer.

The data from the optical fibers is typically integrated with the electrolyzer's control systems. This integration allows for the real-time processing of data and the ability to make immediate adjustments to the electrolyzer's operations based on the sensor readings.

Optionally, the fluid channels include both fuel supply channels leading to the anode and oxidant supply channels leading to the cathode. In some examples, the optical fiber extends within at least one of the types of channels.

Optionally, a network of fluid channels is integrated within the housing, wherein the fluid channels are configured to at least one of: direct water from the water inlet to the electrolytic cell; facilitate the flow of hydrogen to the hydrogen outlet; or facilitate the flow of oxygen to the oxygen outlet. The fluid channels can be adapted to improve the flow rate and pressure of fluids within the electrolyzer to enhance electrolysis efficiency.

Optionally, the optical fiber is embedded within the walls of the fluid channels to protect it from direct exposure to the fluids while allowing for parameter sensing.

Optionally, the optical fiber is bent in a meandering path to improve the distribution of the sensing points.

Optionally, the at least one optical fiber is arranged in one or more layers or plate structures arranged within the housing structure of the electrolyzer.

This placement can ensure that the sensors are in close proximity to key operational areas, such as near the anode and cathode. This strategic positioning leads to accurate and direct measurement of relevant parameters, significantly enhancing the system's ability to monitor and control the electrolysis process effectively. This includes parameters such as temperature gradients, electrical potential differences, and chemical changes at the electrode surfaces. The close proximity enables the sensors to capture minute and rapid changes in these parameters, which may be missed if the sensors were placed further away.

Moreover, this strategic positioning within the layered structures of the electrolyzer ensures a comprehensive monitoring scope. As these layers are integral to the electrolyzer's design and function, embedding the sensors within them allows for a more complete view of the operational conditions across the entire device. This is particularly important in ensuring uniformity in the electrolysis process, as it can help identify and rectify any irregularities in real-time, such as uneven temperature distribution or localized chemical imbalances.

The integration of optical fibers into these layers can contribute to the durability and reliability of the measurement system. By being housed within the structural components, the fibers are less susceptible to external damage or displacement during the electrolyzer's operation. This aspect can be important in maintaining consistent and long-term monitoring capabilities, which can be important for the effective and safe operation of the electrolyzer.

Sensors within the plates/layers might be arranged in straight lines that bend back in a meandering/zigzag pattern, allowing comprehensive monitoring within the electrolyzer.

Optionally, the electrolytic cell system further comprises: a plurality of plate structures arranged in a stacked or parallel configuration, each plate structure including an anode and a cathode; ion-conducting membranes positioned between each adjacent pair of plate structures, wherein each membrane facilitates ion exchange while preventing mixing of hydrogen and oxygen gases; wherein the plate structures and ion-conducting membranes are configured to maximize the surface area for electrolysis and to optimize the efficiency of hydrogen and oxygen gas production. One or more fiber optic sensors can be arranged at or on these plate structures.

Optionally, at least one optical fiber is integrated within a plate structure positioned adjacent to either the anode or the cathode.

Optionally, the at least one optical fiber is embedded within multiple plate structures.

Optionally, the at least one optical fiber is arranged in a grid pattern within the housing structure, providing a matrix of sensing points for detailed spatial analysis of operational parameters.

Optionally, the measurement system includes multiple optical fibers, each configured to extend within different layers or plate structures of the electrolyzer.

Optionally, the at least one optical fiber is glued to the surface of one or more layers or plate structures within the housing structure, such that the optical fiber remains in a fixed position relative to the anode and cathode.

A simplified and cost-effective installation can be obtained. Gluing the fibers can enhance the installation process, as it does not require complex mechanisms or tools to secure the fibers. This simplicity also extends to maintenance; if a sensor needs replacement or repositioning, it can be done with minimal disruption to the electrolyzer's overall structure.

By carefully choosing the locations on the layered structures where the fibers are affixed, the sensors can be exposed optimally to the parameters they are meant to measure. For example, placing a temperature sensor in a location where it can best detect the heat generated during electrolysis, or positioning a pressure sensor where it can accurately monitor the internal pressures within the electrolyzer.

In alternative examples, the optical fiber can be attached using mechanical clamps or magnetic fixtures instead of gluing. Additionally or alternatively, the surface of the layers or plate structures can be adapted, e.g. textured or patterned, to enhance the adherence of the optical fiber.

Optionally, the at least one optical fiber is attached to a plate structure that is positioned adjacent to either the anode or the cathode.

Optionally, the at least one optical fiber is integrally embedded within one or more layers or plate structures of the electrolyzer.

Embedding the fibers provides a robust and secure setup, reducing the risk of damage or displacement during operation. This integration enhances the durability and reliability of the measurement system, ensuring long-term, consistent monitoring capabilities.

By embedding the optical fibers within the structural layers of the electrolyzer, they can be better protected from external mechanical stresses and environmental factors that can otherwise cause damage or degradation. This embedded design inherently increases the durability of the fibers, ensuring they remain functional over extended periods, even under harsh operational conditions.

The integration of fibers within the structural layers minimizes the risk of their displacement or damage during the routine operation and maintenance of the electrolyzer. In conventional setups, where sensors are externally attached or loosely placed, they are more susceptible to accidental movements or impacts. The embedded design according to the disclosure effectively mitigates these risks.

The secure embedding of optical fibers ensures that they remain in constant and correct alignment with the areas they are monitoring. This stability can be important for providing accurate and consistent data over time. In electrolyzer systems, where precise monitoring of parameters like temperature, pressure, and chemical composition can be important, this consistent data collection is invaluable for maintaining optimal operational conditions.

Integrating the fibers within the structural layers allows for a more streamlined and compact design. This integration is particularly beneficial in systems where space is a premium, ensuring that the monitoring system does not add unnecessary bulk or complexity to the electrolyzer.

The design can ensure that the fibers are an integral part of the electrolyzer's construction, as opposed to being mere add-ons or external attachments. Such integration requires precise engineering to ensure that the fibers are securely embedded without compromising their functionality or the integrity of the electrolyzer's structure. It also involves careful selection of materials and fabrication techniques to ensure compatibility between the optical fibers and the structural components of the electrolyzer.

In some examples, the optical fiber is woven into a mesh or grid-like structure within the subcomponent of the electrolyzer, e.g. the layers or plates, providing a more distributed and integrated sensing capability throughout the electrolyzer.

Optionally, the at least one optical fiber is incorporated within plate structures that are parallel to and in direct contact with either the anode or the cathode.

Optionally, the at least one optical fiber is encapsulated within one or more layers.

Optionally, at least one optical fiber is arranged at one or more membranes within the electrolyzer, and/or at or adjacent to at least one of an inlet line or outlet line of the electrolyzer.

The positioning the optical fibers at strategic locations like membranes and inlet/outlet lines enables targeted monitoring of specific areas where important changes in operational parameters are likely to occur. Such strategic positioning allows for early detection of issues like membrane degradation or flow blockages, contributing to the timely maintenance and optimization of the electrolyzer's performance.

By placing optical fibers at membranes, the system can directly monitor parameters that affect the membrane's functionality, such as temperature, pressure, and chemical composition. This can be important because membranes are integral to the electrolysis process, facilitating ion exchange while preventing the mixing of hydrogen and oxygen gases. Early detection of membrane degradation, a common issue in electrolyzers, can prevent operational failures and extend the lifespan of the system.

Similarly, positioning optical fibers at inlet and outlet lines allows for the precise monitoring of flow dynamics, such as the flow rates and composition of water and gases entering and exiting the electrolyzer. This is vital for ensuring the efficiency and safety of the electrolysis process. For example, any blockage or irregularity in flow can significantly impact the system's performance and may pose safety risks. Early detection of such issues through continuous monitoring enables proactive maintenance and adjustments, thus optimizing the electrolyzer's performance.

Placing a sensor near the outlet can be more advantageous for detecting water or bubble formation than near the gas inlet.

In some examples, one or more optical fibers are placed in areas prone to wear or leakage to monitor the integrity of these components.

Optionally, the electrolyzer has a water inlet configured to introduce water into the electrolytic cell, an electrical power source operatively connected to the anode and cathode to facilitate electrolysis of water, and outlets for hydrogen and oxygen, each fluidly connected to the electrolytic cell to enable extraction of hydrogen and oxygen generated during the electrolysis process.

Optionally, the water inlet is configured with a valve mechanism to regulate the flow of water into the electrolytic cell, and includes a filtration system to remove impurities from the water prior to electrolysis.

Optionally, the hydrogen outlet and the oxygen outlet each comprise a gas purification system to purify the respective gases before their exit from the electrolyzer, and pressure control valves to regulate the flow and pressure of the gases being expelled.

One or more sensing points may be arranged at the inlet and outlet ports.

Optionally, the multi-parameter optical measurement system includes a first fiber optic sensor and a second fiber optic sensor both arranged at a flow pathway within the electrolyzer, wherein the first and second fiber optic sensors are placed in close proximity to each other within the flow pathway, and wherein the temperature difference between readings from the first and second fiber optic sensors is configured to be used in determining a value indicative of a flow rate along the areas adjacent to said first and second fiber optic sensors inside the flow pathway.

This provides an improved way for determining flow rates by using temperature differences between closely placed fiber optic sensors. Flow rates can be measured without the need for additional, separate flow sensors, thereby simplifying the system and reducing its complexity.

By using fiber optic sensors that are already a part of the multi-parameter optical measurement system, this method integrates flow rate measurement into the existing infrastructure. This integration eliminates the need for separate flow sensors, which simplifies the overall design of the electrolyzer. A less complex system is generally more reliable and easier to maintain, reducing potential points of failure and simplifying operational processes.

The use of temperature differences to infer flow rates is a direct measurement technique. Since the flow of fluids affects temperature distribution, the variance in temperature readings between two closely placed sensors can be accurately correlated to the flow rate. This method provides precise and localized measurements, offering a clear and direct understanding of the fluid dynamics within the electrolyzer.

This integrated approach to measuring flow rates contributes to the overall operational efficiency of the electrolyzer. Accurate flow rate data can be important for optimizing the electrolysis process, ensuring that the fluid dynamics are maintained at optimal levels for maximum efficiency. By providing this data in a more streamlined and integrated manner, the electrolyzer can operate more effectively, reducing energy consumption and improving output.

Optionally, the multi-parameter optical measurement system is configured to detect gas bubble formation within the electrolyzer, and wherein at least one sensing point along the at least one optical fiber is equipped with a fiber optic sensor configured to identify the presence and/or characteristics of gas bubbles formed in liquid during the chemical reaction or electrolyte medium interaction at the electrolytic cell by the difference in thermal capacity between gas and liquid.

The gas bubble formation is an important aspect of the electrolysis process, as it directly relates to the rate and efficiency of the hydrogen and oxygen generation. The presence, size, frequency, and distribution of these bubbles can indicate the effectiveness of the electrolytic reaction, as well as the overall health and performance of the electrolyzer. Traditional methods of monitoring these parameters may be intrusive or less accurate, disrupting the process or failing to provide detailed data.

The ability to detect and analyze gas bubbles in real-time offers several operational advantages. Firstly, it allows for immediate adjustments to the electrolysis conditions, such as the applied voltage or the flow rate of water, to optimize the generation of hydrogen and oxygen. This optimization can be important for maintaining the efficiency of the process and reducing energy consumption. Secondly, the data gathered from bubble formation can be used to predict and prevent potential issues within the electrolyzer, such as electrolyte degradation or membrane fouling, which can arise from irregularities in gas bubble formation.

Additionally, monitoring gas bubble formation can provide insights into the chemical composition and purity of the generated gases. Anomalies in bubble formation can indicate impurities or changes in the electrolyte composition, which may affect the quality of the produced gases.

Optionally, a controller is configured to utilize the detection of bubble formation by the fiber optic sensor at the at least one sensing point to assess an efficiency of a voltage control process within the electrolyzer, wherein the controller of the electrolyzer is configured to analyze bubble formation patterns, and wherein the controller is configured to determine whether a further increase in voltage is unnecessary and/or inefficient based on a saturation of detected bubble formation.

In electrolyzers, the formation of gas bubbles is a natural byproduct of the electrolysis process. The rate, size, and distribution of these bubbles can provide valuable insights into the operational state of the electrolyzer. Specifically, bubble formation patterns are closely linked to the voltage applied across the electrolytic cell. Under optimal conditions, the voltage facilitates efficient electrolysis with controlled bubble formation. However, variations in voltage can lead to either inefficient electrolysis (under-voltage) or excessive energy consumption and potential damage to the system (over-voltage).

Fiber optic sensors, distributed along the optical fibers within the electrolyzer, can be leveraged to detect and analyze these bubble formation patterns. The sensors are capable of detecting subtle changes in the characteristics of bubbles, such as their frequency, size, and distribution within the liquid medium. This data is then relayed to a controller, which interprets these patterns in the context of electrolysis efficiency.

By analyzing this data, the controller can assess whether the current voltage level is optimal. For instance, a saturation of bubble formation may indicate that the voltage is higher than necessary for efficient electrolysis, leading to unnecessary energy consumption and likely accelerating wear and tear on the electrolyzer's components. Conversely, insufficient bubble formation can suggest that the voltage is too low, resulting in suboptimal electrolysis.

In response to these assessments, the controller can adjust the voltage to maintain efficient electrolysis. This active management of voltage based on real-time bubble formation data leads to several key benefits:
By ensuring the voltage is neither too high nor too low, the system maintains electrolysis efficiency, reducing energy waste and operational costs.

Over-voltage conditions can be hazardous, possibly leading to overheating or damage to the electrolyzer. By using bubble formation as an indicator, the system can prevent such scenarios, enhancing safety.

By avoiding conditions that can cause stress or damage to the electrolyzer's components, such as over-voltage, the system can extend the lifespan of the electrolyzer.

Consistent voltage control contributes to a stable electrolysis process, which can lead to a more consistent quality of the produced hydrogen and oxygen gases.

In some examples, the controller can be equipped with artificial intelligence or machine learning algorithms to predict and optimize the electrolysis process based on the bubble formation patterns.

In some examples, the controller can be networked to external systems for remote monitoring and control.

Optionally, the optical fiber includes Bragg gratings at the sensing points, each configured to reflect specific wavelengths of light that change in response to variations in the operational parameters.

Optionally, the at least one optical fiber includes a combination of one or more Fiber Bragg Grating (FBG) sensors and one or more interferometer sensors, and wherein the Fiber Bragg Grating and interferometer sensors are configured to measure selected operational parameters.

This combination provides diverse and comprehensive monitoring capabilities within a single fiber, enhancing the system's efficiency and effectiveness in a space-limited environment like an electrolyzer.

FBG sensors are renowned for their precision in measuring parameters like temperature and strain by reflecting specific wavelengths of light. Interferometer sensors, on the other hand, are adept at detecting changes in optical paths. By combining these two types of sensors within a single fiber, the system can simultaneously monitor a wide range of operational parameters. This multifunctionality is particularly beneficial in environments where space is at a premium, such as within the compact structure of an electrolyzer.

The integration of both sensor types in one fiber allows for cross-validation of data. For instance, changes in temperature detected by the FBG sensor can be corroborated by the interferometer sensor's readings. This cross-referencing enhances the overall accuracy and reliability of the system, leading to more precise control and optimization of the electrolyzer's performance.

Incorporating both sensor types into a single optical fiber significantly reduces the need for multiple, separate sensor systems. This consolidation not only saves space within the electrolyzer, which can be important given the compact nature of these devices, but also reduces the overall cost and complexity of the measurement system. It simplifies the installation and maintenance processes, making the system more user-friendly and efficient.

The combination of FBG and interferometer sensors in a single fiber can offer improved sensitivity and quicker response times to changes in operational conditions. This can be important for the proactive management and optimization of electrolyzer operations, particularly in dynamic conditions where rapid changes can occur.

In some examples, the FBG and interferometer sensors can be tuned to different specific operational conditions, such as high temperature or high pressure environments.

Optionally, the interferometer sensors are being configured to detect changes in refractive index associated with various operational parameters.

Optionally, the one or more Fiber Bragg Grating (FBG) sensors and the one or more fiber interferometer sensors, which are embedded within the same optical fiber, are configured to operate at different wavelengths such that the one or more FBG sensors and the one or more interferometer sensors are allowed to function independently and do not interfere with each other's measurements despite their location within the single optical fiber.

This configuration prevents the sensors from interfering with each other's measurements despite being located within the same optical fiber. This can maintain the accuracy and reliability of the measurements, thereby enhancing the overall performance of the measurement system.

In typical sensor systems, when multiple sensors are closely located within a single optical fiber, there's a significant risk of interference if no proper multiplexing technology is used. This interference can arise from overlapping sensor signals, leading to erroneous readings and compromised data integrity. However, this can be advantageously prevented by configuring the FBG and interferometer sensors to function at different wavelengths.

FBG sensors work by reflecting specific wavelengths of light where the grating reflects light at its Bragg wavelength and transmits other wavelengths. Interferometer sensors, on the other hand, typically operate based on the principle of light interference, which can be optimized to function at a wavelength different from the FBG sensors.

By operating at different wavelengths, each sensor type can perform its specific function without any cross-talk or interference from the other. This is called Wavelength Domain Multiplexing (WDM). This separation ensures that the FBG sensors can accurately measure parameters like strain or temperature, while the interferometer sensors can simultaneously perform tasks such as detecting changes in refractive index, important for gas sensing, without their signals getting mixed.

The non-interference can improve the accuracy and reliability of the measurements, which is particularly important in an electrolyzer environment where precise data on operational parameters like temperature, strain, gas composition, and refractive index changes are vital for efficient and safe operation. Moreover, this design enhances the overall performance of the measurement system by enabling comprehensive monitoring within a single, compact fiber optic setup, thus reducing complexity and increasing the system's efficiency.

In some examples, the optical fiber can incorporate wavelength division multiplexing, allowing for a broader range of wavelengths to be used simultaneously without interference. This would enable a larger number of sensors to operate independently on the same fiber.

Optionally, the interferometer sensor integrated within the at least one optical fiber is a hollow-core fiber sensor, which is configured for gas sensing within the electrolyzer, and wherein the hollow-core fiber sensor is arranged for detecting and analyzing gas composition and/or gas concentration.

The hollow-core fiber sensor, specifically designed for gas sensing within the electrolyzer, can be configured to detect and analyzing gas composition and/or gas concentration. The use of a hollow-core sensor enhances the system's ability to precisely detect and analyze gas properties, contributing to the optimization of the electrolysis process.

By precisely identifying gas types and their concentrations, the sensor can provide important data that informs the control and optimization of the electrolysis process.

Hollow-core fiber sensors offer a unique advantage in that they can contain and guide the gas within their core for direct interaction with the light guided in the hollow core of the fiber. This direct interaction increases the sensitivity and specificity of the gas detection, as the light in the fiber can interact more effectively with the gas molecules. This results in more accurate and reliable gas sensing compared to traditional gas sensors.

By providing real-time data on the gas environment within the electrolyzer, the hollow-core fiber sensor plays an important role in ensuring safety. For example, it can detect the buildup of hazardous gases before they reach dangerous levels.

Monitoring the composition and concentration of gases can help in assessing the efficiency of the electrolysis process, enabling adjustments to be made in real-time for optimal performance.

The inclusion of the hollow-core fiber sensor complements the other sensors in the multi-parameter optical measurement system. By adding gas sensing capabilities, the system becomes more comprehensive, allowing for a more complete assessment of the electrolyzer's operational parameters.

Optionally, multiple sensors are used to measure the same operational parameter for monitoring the distribution and gradient of the operational parameter in the electrolyzer.

This configuration allows for the mapping of operational parameters across different regions of the electrolyzer. By having multiple measurement points, it becomes possible to understand how a particular parameter varies within the system. For instance, temperature gradients or pressure variations across the electrolyzer can be closely monitored, providing a more comprehensive picture of the internal operating conditions.

The ability to measure gradients (changes in a parameter over a certain distance or area) can be important for identifying potential issues such as hot spots, flow inconsistencies, or uneven distribution of reactants. This information is vital for preventive maintenance and for addressing operational inefficiencies before they escalate into more significant problems.

Monitoring of operational parameters with such granularity also contributes to the safety of the electrolyzer. Early detection of abnormal conditions, like excessive pressure build-up or extreme temperature variations, allows for timely interventions, thereby preventing hazardous situations.

The detailed data collected by multiple sensors enables predictive maintenance strategies. By analyzing trends and patterns in the operational parameters, potential issues can be identified and addressed before they lead to system failures, reducing downtime and maintenance costs.

By using multiple sensors to measure the same parameter, the system mitigates the risk of inaccurate readings due to sensor malfunction or localized anomalies. Each sensor acts as a check against the others, ensuring that the data collected is reliable and reflective of the true operational conditions within the electrolyzer.

In some examples, the sensing points can be arranged in a matrix or grid pattern within the electrolyzer, allowing for a 3D mapping of the operational parameters. This design can facilitate a more comprehensive understanding of the gradients and distributions of the parameters within the electrolyzer.

Optionally, the multi-parameter optical measurement system is configured to measure the distribution of the same operational parameter within different regions of the electrolyzer. In this way, operational inconsistencies and potential malfunctions within the electrolyzer can be better identified.

Optionally, the measurement system comprises a data processing system, wherein the data processing system is configured to receive, process, and analyze data collected by the multi-parameter optical measurement system, including data from the various sensors integrated within the at least one optical fiber; wherein the data processing system utilizes computer models to optimize the operation and the operational conditions and/or settings of the electrolyzer. In some examples, the data processing system is adapted to adjust the operation of the electrolyzer in real-time or near real-time based on the analyzed data.

According to an aspect, the invention provides for a method of arranging an electrolyzer, comprising the steps of: providing a housing structure for the electrolyzer; providing at least one electrolytic cell within the housing structure, wherein the electrolytic cell includes an anode, a cathode and an ion-conducting membrane positioned between the anode and the cathode; providing a water inlet to introduce water into the different flow channels in the electrolytic cell; operationally connecting an electrical power source to the anode and cathode to facilitate the electrolysis of water; establishing outlets for hydrogen and oxygen, each fluidly connected to the electrolytic cell, to enable extraction of hydrogen and oxygen generated during the electrolysis process; integrating a multi-parameter optical measurement system within the electrolyzer, wherein the multi-parameter optical measurement system is configured to monitor multiple operational parameters; incorporating at least one optical fiber within the electrolyzer as part of the multi-parameter optical measurement system; distributing multiple sensing points along the at least one optical fiber within the electrolyzer; and configuring each sensing point to detect one or more operational parameters within the electrolyzer.

The integration of the multi-parameter optical measurement system within the electrolyzer may involve the strategic placement and distribution of optical fibers and sensors, the distribution of sensing points along these fibers, and the specific configuration of each sensing point for detecting various operational parameters.

In some examples, the optical fibers and sensors are integrated in a manner that ensures they cover the entire operational scope of the electrolyzer. The measurement system track multiple operational parameters simultaneously, which can be important for a detailed and nuanced understanding of the electrolyzer's functioning. This enables real-time detection of anomalies, aids in the optimization of the electrolysis process, and enhances the overall safety and efficiency of the system. By capturing a complete picture of the electrolyzer's operations, the system can facilitate proactive adjustments and maintenance, thereby extending the lifespan and performance of the electrolyzer.

The spatial distribution of sensing points can ensure that data is captured from all relevant areas within the system. Each sensing point acts as a localized data collection node, providing specific information about its immediate surroundings. This granular level of monitoring can be important for capturing detailed operational data across the electrolyzer. By having multiple points of data collection, the system can more accurately pinpoint issues, understand the interplay of various operational parameters, and provide a more complete view of the electrolyzer's performance.

The individual sensors can be optimized to sense the target parameter e.g. temperature, strain, pressure, gas bubble forming etc. The relation between data from different sensor can also provide information about flow direction/speed, voltage control, etc. This enables a multi-parameter sensing system based on a single sensor technology platform. The measurement system may also include interferometric type of sensor for gas concentration measurement.

The proposed system includes an array of multiple fiber sensors in a single optical fiber which can be routed in the complex flow channel inside an electrolyzer to monitor different relevant parameters at the different critical locations. The fiber sensors can either be grating or interferometer based and the sensors in a single fiber will be interrogated without mutual interference.

The measurement system can measure combination of different parameters including temperature at different locations inside the electrolyzer to reveal information and condition of the electrolyzer operation.

The multi-parameter sensing system arranged inside the electrolyzer can provide real-time and dedicated process related data which can be used to monitor the condition and optionally to optimize the performance of the electrolyzer.

In some examples, fiber optic sensors are integrated directly into the anode or cathode plates. The optical fibers can be made of an inert material, typically glass.

According to an aspect, the invention provides for a multi-parameter fiber optic sensing system adapted to be integrated in an electrolyzer, the multi-parameter optical measurement system being configured to monitor multiple operational parameters, wherein the multi-parameter optical measurement system comprises at least one optical fiber configured to be extendable within the electrolyzer, and wherein multiple sensing points are distributed along said at least one optical fiber, and wherein each sensing point is configured to detect one or more operational parameters.

It will be appreciated that the term "flow channels" or "fluid channels" as used in the context of this disclosure can be understood to encompass channels within the electrolyzer designed to facilitate the flow of various fluid types, including both liquid and gas, or multi-phase (e.g. two-phase) medium. It is recognized that the electrolyzer's design and operation are not limited to the handling of a singular phase of matter but are instead capable of efficiently managing a diverse range of fluid states, whether singularly in the form of either liquid or gas, or in a combined form as a two-phase medium.

It will be appreciated that any of the aspects, features and options described in view of the electrolyzer apply equally to the method and the described system, device and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a multi-parameter optical measurement system;
Fig. 2 shows a schematic diagram of an embodiment of a multi-parameter optical measurement system;
Fig. 3 shows a schematic diagram of an embodiment of a multi-parameter optical measurement system;
Fig. 4 shows a schematic diagram of an embodiment of a multi-parameter optical measurement system;
Fig. 5 shows a schematic diagram of an embodiment of a multi-parameter optical measurement system;
Fig. 6 shows a schematic diagram of an embodiment of a multi-parameter optical measurement system;
Fig. 7 shows a schematic diagram of an embodiment of a multi-parameter optical measurement system; and
Fig. 8 shows a schematic diagram of an embodiment of a multi-parameter optical measurement system.

### DETAILED DESCRIPTION

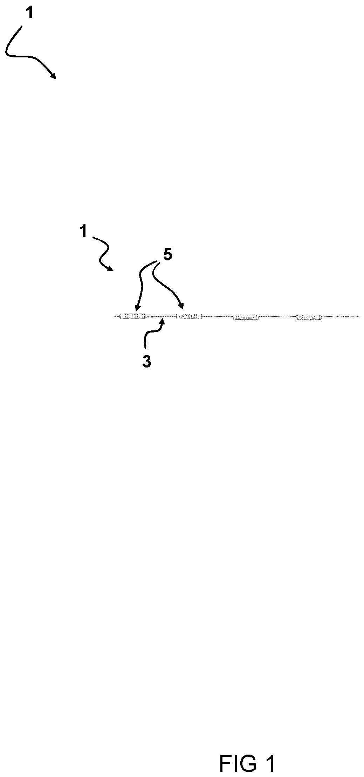

Fig. 1 shows a schematic diagram of an embodiment of a multi-parameter optical measurement system 1 that is integrated in an electrolyzer (not shown) for generating hydrogen and oxygen. The electrolyzer includes a housing structure; at least one electrolytic cell contained within the housing structure, the electrolytic cell comprising an anode and a cathode separated by an ion-conducting membrane; a water inlet configured to introduce water into the electrolytic cell; an electrical power source operatively connected to the anode and cathode to facilitate electrolysis of water; and outlets for hydrogen and oxygen, each fluidly connected to the electrolytic cell to enable extraction of hydrogen and oxygen generated during the electrolysis process. The electrolyzer-embedded multi-parameter optical measurement system 1 is configured to monitor multiple operational parameters. At least one optical fiber 3 is provided that is configured to extend within the electrolyzer. Multiple sensing points 5 are distributed along said at least one optical fiber 3, each sensing point 5 is configured to detect one or more operational parameters within the electrolyzer.

The electrolyzer uses electrical energy to drive a chemical reaction, typically water splitting to generate hydrogen and oxygen. The electrolyzer has an electrolyte that facilitates ion transport. The electrolyte carries ions from one electrode to the other during water splitting. The anode is the site of water oxidation (oxygen evolution), and the cathode is where hydrogen is produced. Catalysts can be used at the electrodes to facilitate the electrochemical reactions. These catalysts lower the activation energy required for the reactions, making the processes more efficient. The electrolyzer can employ a dedicated membrane, like a Proton Exchange Membrane or PEM, that allows only specific ions to pass through while preventing the mixing of reactants. The electrolyzer requires an external power source to initiate the electrolysis process. The electrolyzer may have gas diffusion layers that help distribute gases evenly across the catalyst surface, and, additionally or alternatively, bipolar plates that aid in distributing the required gases to the electrodes and also help in current collection. In the electrolyzer, water is consumed as a reactant.

In electrolyzers, flow channels are used to supply water to the electrolysis reaction site and remove the produced gases, e.g. hydrogen at the cathode and oxygen at the anode. The design of these channels can be critical for efficient operation. They need to ensure the even distribution of water to the electrode surfaces and efficient gas removal to avoid the formation of gas bubbles that can block the electrode surface and reduce efficiency.

In some high-pressure electrolyzers, the channels can be designed to withstand and operate efficiently under high pressure, which is important for direct storage and use of the generated hydrogen.

Electrolyzers also generate heat during operation, and the flow channels can play a role in dissipating this heat to maintain a stable operating temperature. In some examples, dedicated thermal management flow channels are present on the other side of the bipolar plate to further ensure the optimal temperature distribution.

Detailed information from within the electrolyzer may be important, contrasting with the standard practice of placing a single external sensor. More valuable data can be obtained by placing sensors within specific cell parts, like channels or layers.

Optical fibers offer enhanced design flexibility. They can be bent with small radii, allowing various routing patterns through the electrolyzer. This flexibility applies to sensor placement and fiber routing within the cell.

Fiber optics can be integrated in different locations in the electrolyzer. For example, in flow channels, either straight or curved. Additionally or alternatively, sensors can be placed at the membranes. Integrating sensors at the membrane layers allows for detailed monitoring. Additionally or alternatively, sensors can be placed at the inlet and/or outlet ports. These points may be connected through all the plates and cells, allowing the fiber to run through multiple cells for comprehensive measurement.

The placement of sensors can be targeted and based on the need for monitoring specific parameters. Different types of sensors may be required depending on the location within the electrolyzer and the process being monitored. Flow sensors may be used to ensure unobstructed flow in each channel, while temperature sensors can be used for temperature mapping.

Flow and temperature sensors provide important sensory data related to the operation of the electrolyzer. However, various other parameters may also be monitored, such as for example mechanical, pressure, etc.

Monitoring gas levels or analyzing gas may also play an important role. For example, monitoring hydrogen levels at the inlet or outlet of the electrolyzer can be important. Early detection of gas crossover near the membrane and monitoring the quality of hydrogen, including detecting contaminants, can be important for safety and efficiency.

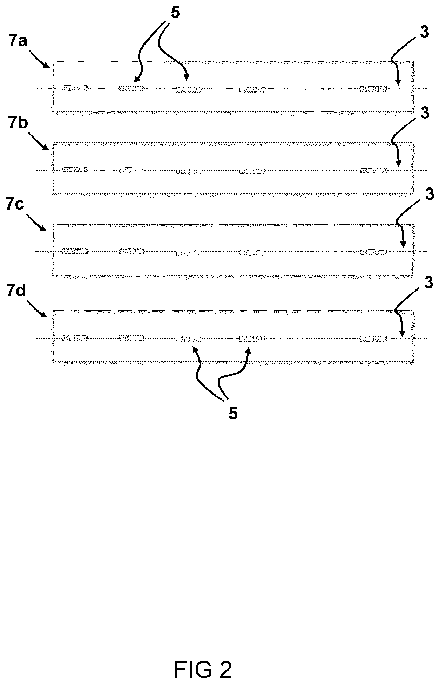

Fig. 2 shows a schematic diagram of an embodiment of a multi-parameter optical measurement system 1. In this example, the measurement system 1 is provided with multiple optical fibers 3, each having multiple sensing points 5. These multiple optical fibers may be part of different sub-units 7a-d that are distributed at different locations within the electrolyzer.

The ability to integrate different types of sensors (e.g., for temperature, bubble formation, gas analysis) within a single fiber optic line is a significant advantage. This integration allows for simultaneous and comprehensive monitoring of multiple parameters, enhancing the efficiency and effectiveness of the monitoring process.

The system's design enables the tailoring of sensor placements and combinations to specific processes within the electrolyzers. This customization ensures more detailed and targeted data collection, optimizing the monitoring process for specific operational needs.

The multi-parameter fiber optic measurement system can be integrated at multiple locations within the electrolyzer, as it has relatively small dimensions. The fiber optic system can fit into the intricate and narrow channels of electrolyzers, enabling accurate measurements within these confined spaces. The fiber optic sensor system can provide spatial information about multiple relevant parameters.

The small bending radius of the optical fibers allows for versatile routing patterns, providing comprehensive coverage and enabling more detailed data collection. The measurement system enables precise, localized, and comprehensive monitoring of various critical operational parameters within the electrolyzer.

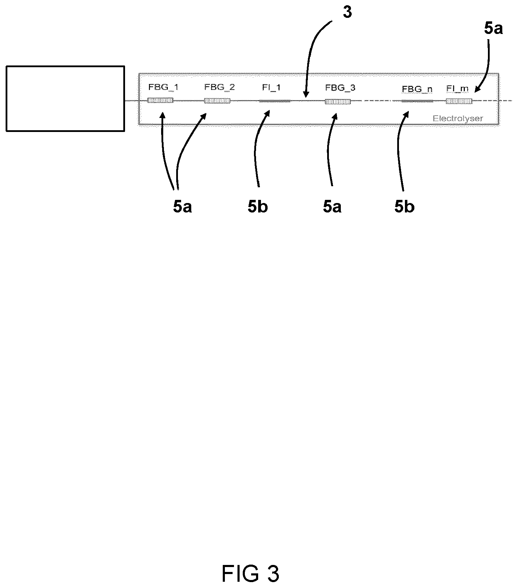

Fig. 3 shows a schematic diagram of an embodiment of a multi-parameter optical measurement system 1. In this example, the optical fiber 3 has a combination of FBG sensors 5a and interferometer sensors 5b, and wherein the FBG and interferometer sensors are configured to measure selected operational parameters.

The FBG sensors 5a and the fiber interferometer sensors 5b, are embedded within the same optical fiber 3, and are configured to operate at different wavelengths such that the FBG sensors 5a and the interferometer sensors 5b are allowed to function independently and do not interfere with each other's measurements despite their close or co-location within the single optical fiber 3.

Various parameters may be monitored. In some examples, temperature variations are used to infer flow characteristics. This can eliminate the need for a separate flow sensor in an advantageous way, deriving the same information from temperature measurements using fiber optic sensors. The time correlation between the readings from the two temperature sensors provides information about the flow. For example, the flow characteristics is derived from at least two temperature sensors. By placing these sensors relatively close to each other, the correlation between their readings can be used to monitor flow, based on the principle that temperature fluctuations in a fluid affect a first fiber grating sensor FBG1 first and then a second fiber grating sensor FBG2. Knowing the distance between these two points allows for the calculation of flow rate based on correlation of the temperature changes.

Integrating both FBG sensors and interferometer sensors into a single optical fiber offers targeted measurements and greater functionality in space-limited electrolyzer applications.

The measurement system's flexibility allows it to be tailored to different electrolyzer designs and integrated into various locations such as flow channels, membranes, and inlet/outlet ports. This adaptability is important given the diversity of electrolyzer designs and the specific monitoring requirements of each design.

The multi-parameter fiber optic measurement system 1 can be fit into these small spaces, enabling precise measurements inside the electrolyzer. Furthermore, the small radii bending capability of the optical fibers allows for versatile routing patterns through the electrolyzer, providing comprehensive coverage and enabling more detailed and valuable data collection compared to external sensors.

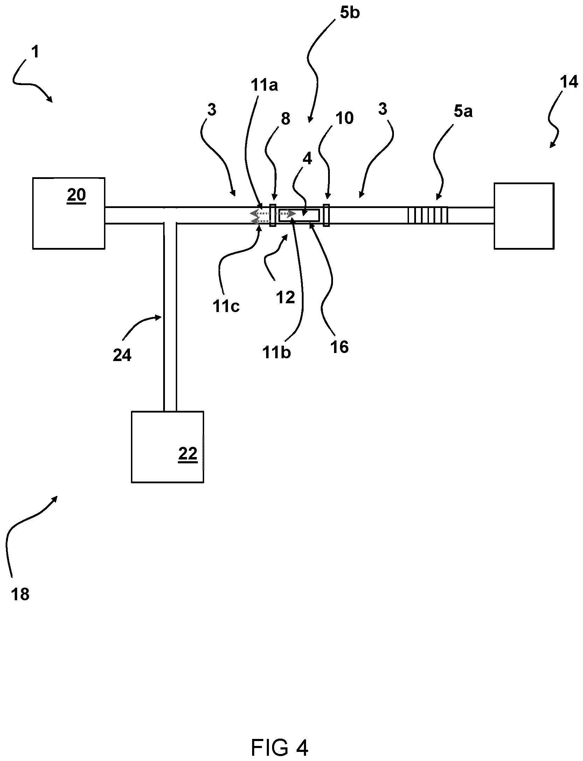

Fig. 4 shows a schematic diagram of an embodiment of a multi-parameter optical measurement system 1 including one or more FBG sensors and one or more fiber interferometer sensors 5b. In this example, the interferometer sensor 5b integrated within the optical fiber 3 is a hollow-core fiber sensor, which is configured for gas sensing within the electrolyzer. The hollow-core fiber sensor can be arranged for detecting and analyzing gas composition and/or gas concentration.

The hollow core fiber sensor can be configured to detect a substance concentration in a medium 4 which fills the hollow core via the connection holes to the environment. In this example, the measurement system 1 comprises: a measurement optical fiber 3 including a first reflecting element 8, a second reflecting element 10 and a hollow core fiber 12 arranged in between the first reflecting element 8 and the second reflecting element 10, the hollow core fiber 12 being configured to receive the medium 4. The measurement system 1 may be provided with an excitation unit 14 configured to generate a photothermal excitation effect in the core 16 of the hollow core fiber 12.

In some examples, a sensing unit 18 is provided that comprises a light source 20 configured to direct light towards the measurement fiber 3 with the hollow core fiber 12, wherein an incident light is divided on the first reflecting element 8 of the measurement optical fiber 3 into a transmitted light 11b and a reflected light 11a, and wherein the transmitted light 11b returns to and passes the first reflecting element 8 after being reflected by the second reflecting element 10 of the measurement optical fiber, and wherein the reflected light 11a and the returned transmitted light 11c are guided to a detector 22 of the sensing unit 18 by means of an optical line 24; wherein the sensing unit 18 is adapted to prevent interference between the reflected light 11a and the returned transmitted light 11c in the optical line 24.

Although the hollow core fiber may extend all the way between the first reflective element 8 and the second reflecting element 10, it is also possible that the hollow core fiber only extends over a portion of the space between the first reflective element 8 and the second reflecting element 10.

In some examples, the excitation unit 14 includes a pump laser. The pump laser may also be arranged at the side of the sensing unit.

The sensing unit 18 may use light reflected by two different reflecting elements 8, 10 to sense the effect of an excitation unit on a medium 4 inside a hollow core fiber 12. The light source 20 of the sensing unit 18 can be configured to emit light with a wavelength that does not overlap with that of the excitation unit 14, and the coherence length of the light source may be shorter than the distance between the two reflections. This prevents direct interference between the two beams reflected towards the detector 22, and the interference is only obtained at the detector 22. The two reflected light beams can be guided to the detector using an optical line 24, wherein interference in said optical line is prevented due to the configuration of the measurement system 1.

In some examples, the first reflecting element 8 may be a partial reflector. Some light may pass through the first reflecting element 8 towards the second reflecting element 10. The reflections of the light (cf. electromagnetic wave) combined in the optical line 24 do not interfere with each other because path length difference is larger than the coherence length of the light generated by the light source of the sensing unit 18.

Advantageously, by suitably selecting the coherence length, direct interference between the received reflected light and returned transmitted light in the optical line can be effectively avoided. The stability of the measurements can be significantly enhanced. The accuracy of the measurements can be increased as the measurements become less sensitive to the change in intensity.

Using a hollow-core fiber for gas sensing, alongside an FBG sensor and a fiber interferometer, can be more effective if they operate at different wavelengths. This can effectively ensure non-interference and optimal functioning of the combined sensor system. Advantageously, the combination provides a broader range of sensing capabilities, as each sensor type can operate independently without affecting the other's performance.

The HCF can be connected to the fiber optic sensor system using standard single mode optical fiber which is also use to manufacture FBG. This enables the configuration of combining HCF with FBG in the single mode connection fiber for the HCF.

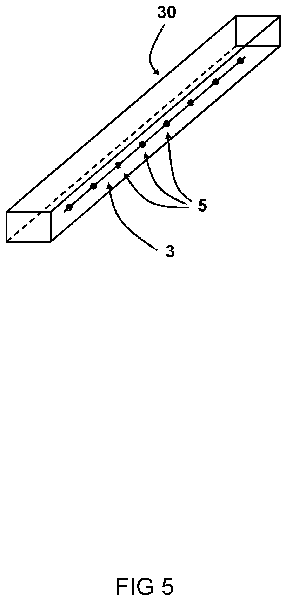

Fig. 5 shows a schematic diagram of an embodiment of a multi-parameter optical measurement system 1. In this example, the a optical fiber 3 is arranged within at least one flow channel 30 of the electrolyzer, the flow channel 30 being configured to facilitate a flow of fluids within the electrolyzer. The optical fiber follows at least a portion of the path of the one or more flow channels 30.

In some examples, fibers can be routed through one channel and out to another for comprehensive channel coverage. This routing can be optimized based on specific requirements/conditions, such as symmetric temperature distribution. If the distribution is symmetric, the fiber may only need to route through one half of the flow channel for example.

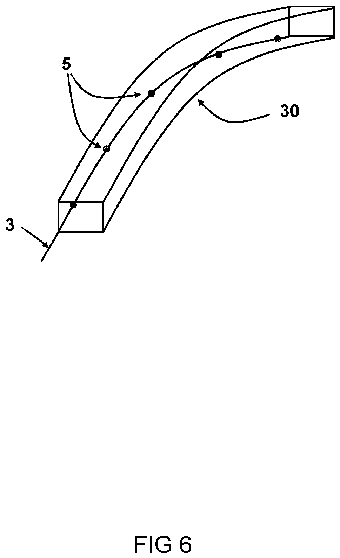

Fig. 6 shows a schematic diagram of an exemplary embodiment of a multi-parameter optical measurement system 1, with the at least one optical fiber 3 being arranged within a curved flow channel 30 of the electrolyzer. The optical fiber 3 can bend and follow the curvature of the curved flow channel 30.

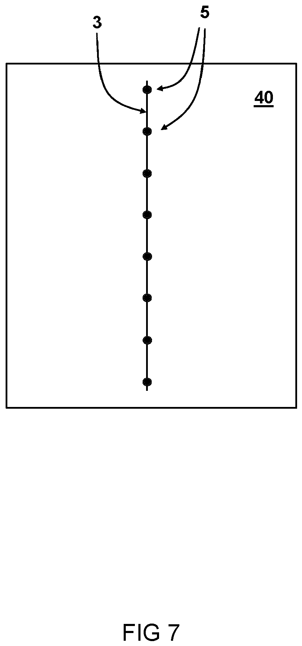

Fig. 7 shows a schematic diagram of an embodiment of a multi-parameter optical measurement system 1. The exemplary optical fiber of the multi-parameter optical measurement system 1 is arranged in/at one or more layers or plate structures 40 that are arranged within the housing structure of the electrolyzer.

In some examples, the at least one optical fiber 3 is attached to the surface of one or more layers or plate structures within the housing structure. Various fixation techniques may be employed. For examples, the optical fiber 3 may be glued to the surface of the layers or plate structures 40. However, it is also possible that the optical fiber 3 attached via other means, such as for example physical attachment units.

In some examples, advantageously, the at least one optical fiber is integrally embedded within one or more layers or plate structures 40 of the electrolyzer.

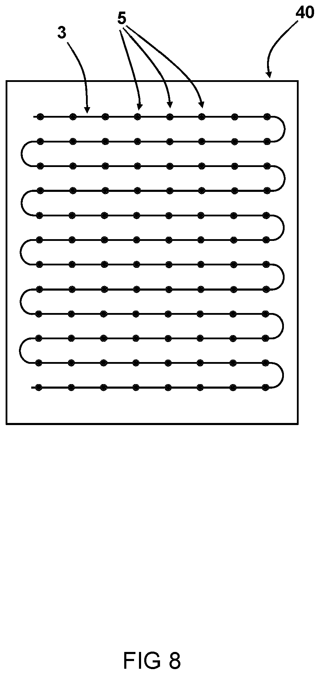

Fig. 8 shows a schematic diagram of an embodiment of a multi-parameter optical measurement system 1. In this example, the optical fiber is bent in a structured pattern following a meandering path, such that a structured matrix or mesh of measurement points is obtained at the layers or plate structures 40 of the electrolyzer.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. An electrolyzer for generating hydrogen and oxygen, comprising: a housing structure; at least one electrolytic cell contained within the housing structure, the electrolytic cell comprising an anode and a cathode separated by an ion-conducting membrane; a water inlet configured to introduce water into the electrolytic cell; an electrical power source operatively connected to the anode and cathode to facilitate electrolysis of water; and outlets for hydrogen and oxygen, each fluidly connected to the electrolytic cell to enable extraction of hydrogen and oxygen generated during the electrolysis process; and wherein a multi-parameter optical measurement system is integrated within the electrolyzer, the multi-parameter optical measurement system being configured to monitor multiple operational parameters, wherein the multi-parameter optical measurement system comprises at least one optical fiber configured to extend within the electrolyzer, wherein multiple sensing points are distributed along said at least one optical fiber, and wherein each sensing point is configured to detect one or more operational parameters within the electrolyzer.

2. The electrolyzer according to claim 1, wherein the multi-parameter optical measurement system further comprises a plurality of sensor types integrated within a same optical fiber, each sensor type being distinct and configured to monitor a specific operational parameter of the electrolyzer, and wherein the at least one optical fiber is routed through multiple parts of the electrolyzer in order to monitor operational parameters in different regions of the electrolyzer.

3. The electrolyzer according to claim 1 or 2, wherein the multi-parameter optical measurement system includes at least two of, preferably, at least three of: a temperature sensor, a strain sensor, a fluid flow sensor, a fluid characterization sensor, a gas-in-liquid detection sensor, a pressure sensor, a gas sensing sensor, or a chemical composition sensor.

4. The electrolyzer according to claim 1, 2 or 3, wherein the at least one optical fiber is arranged within one or more flow channels of the electrolyzer, the flow channels being configured to facilitate a flow of fluids within the electrolyzer, and wherein the optical fiber follows at least a portion of the path of the one or more flow channels.

5. The electrolyzer according to any one of the preceding claims, wherein the at least one optical fiber is arranged in one or more layers or plate structures arranged within the housing structure of the electrolyzer.

6. The electrolyzer according to claim 5, wherein the at least one optical fiber is glued to the surface of one or more layers or plate structures within the housing structure, such that the optical fiber remains in a fixed position relative to the anode and cathode.

7. The electrolyzer according to claim 5, wherein the at least one optical fiber is integrally embedded within one or more layers or plate structures of the electrolyzer.

8. The electrolyzer according to any one of the preceding claims 5-7, wherein at least one optical fiber is arranged at one or more membranes within the electrolyzer, and/or at or adjacent to at least one of an inlet line or outlet line of the electrolyzer.

9. The electrolyzer according to any one of the preceding claims, wherein the multi-parameter optical measurement system includes a first fiber optic sensor and a second fiber optic sensor both arranged at a flow pathway within the electrolyzer, wherein the first and second fiber optic sensors are placed in close proximity to each other within the flow pathway, and wherein the temperature difference between readings from the first and second fiber optic sensors is configured to be used in determining a value indicative of a flow rate along the areas adjacent to said first and second fiber optic sensors inside the flow pathway.

10. The electrolyzer according to any one of the preceding claims, wherein the multi-parameter optical measurement system is configured to detect gas bubble formation within the electrolyzer, and wherein at least one sensing point along the at least one optical fiber is equipped with a fiber optic sensor configured to identify the presence and/or characteristics of gas bubbles formed in liquid during the chemical reaction or electrolyte medium interaction at the electrolytic cell by the difference in thermal capacity between gas and liquid.

11. The electrolyzer according to claim 10, wherein a controller is configured to utilize the detection of bubble formation by the fiber optic sensor at the at least one sensing point to assess an efficiency of a voltage control process within the electrolyzer, wherein the controller of the electrolyzer is configured to analyze bubble formation patterns, and wherein the controller is configured to determine whether a further increase in voltage is unnecessary and/or inefficient based on a saturation of detected bubble formation.

12. The electrolyzer according to any one of the preceding claims, wherein the at least one optical fiber includes a combination of one or more Fiber Bragg Grating (FBG) sensors and one or more interferometer sensors, and wherein the FBG and interferometer sensors are configured to measure selected operational parameters.

13. The electrolyzer according to claim 12, wherein the one or more Fiber Bragg Grating (FBG) sensors and the one or more fiber interferometer sensors, which are embedded within the same optical fiber, are configured to operate at different wavelengths such that the one or more FBG sensors and the one or more interferometer sensors are allowed to function independently and do not interfere with each other's measurements despite their co-location within the single optical fiber.

14. The electrolyzer according to any one of the preceding claims 12-13, wherein the interferometer sensor integrated within the at least one optical fiber is a hollow-core fiber sensor, which is configured for gas sensing within the electrolyzer, and wherein the hollow-core fiber sensor is arranged for detecting and analyzing gas composition and/or gas concentration.

15. The electrolyzer according to any one of the preceding claims, wherein multiple sensors are used to measure the same operational parameter for monitoring the distribution and gradient of the operational parameter in the electrolyzer.

16. A method of arranging an electrolyzer, comprising the steps of:
providing a housing structure for the electrolyzer;
providing at least one electrolytic cell within the housing structure, wherein the electrolytic cell includes an anode, a cathode and an ion-conducting membrane positioned between the anode and the cathode;
providing a water inlet to introduce water into the electrolytic cell;
operationally connecting an electrical power source to the anode and cathode to facilitate the electrolysis of water;
establishing outlets for hydrogen and oxygen, each fluidly connected to the electrolytic cell, to enable extraction of hydrogen and oxygen generated during the electrolysis process;
integrating a multi-parameter optical measurement system within the electrolyzer, wherein the multi-parameter optical measurement system is configured to monitor multiple operational parameters;
incorporating at least one optical fiber within the electrolyzer as part of the multi-parameter optical measurement system;
distributing multiple sensing points along the at least one optical fiber within the electrolyzer; and
configuring each sensing point to detect one or more operational parameters within the electrolyzer.
